# EUROPEAN PATENT SPECIFICATION

(11) **EP 2 977 703 B1**
(45) Date of publication and mention of the grant of the patent: **25.10.2017**
(21) Application number: 15178220.8
(22) Date of filing: 24.07.2015
(51) Int. Cl.: F28F 3/02, F28D 9/00

(54) **HEAT EXCHANGER WITH SLOTTED GUARD FIN**
WÄRMETAUSCHER MIT GESCHLITZTER SCHUTZRIPPE
ÉCHANGEUR DE CHALEUR AVEC AILETTE DE GARDE À FENTES

(30) Priority: 25.07.2014 US 201414340632
(43) Date of publication of application: 27.01.2016
(73) Proprietor: Hamilton Sundstrand Corporation, Windsor Locks, CT 06096-1010 (US)
(72) Inventor: ARMY, Jr., Donald E., Enfield, CT 06082 (US); KAN, George, West Hartford, CT 06117 (US); SPINETI, Michael, Newington, CT 06111-5700 (US); STEPHENS, Kurt L., Enfield, CT 06082 (US); ZAGER, Michael, Windsor, CT 06095 (US)
(74) Representative: Hull, James Edward

(56) References cited:
- EP-A2- 1 528 350
- JP-A- H07 159 074
- US-A1- 2012 211 215

## Description

### BACKGROUND

The subject matter disclosed herein generally relates to heat exchangers, and more specifically, to guard fins for heat exchangers.

A typical air-to-air counterflow heat exchanger consists of a stack of brazed, thermally interconductive air flow sections or layers. Hot air and cold air are forced through alternate layers in order to exchange heat. In a gas turbine air conditioning system, the hot air comes from the engine bleed and flows through bleed layers. The cold air is outside air and flows through ram layers. These alternately stacked ram and bleed layers are joined together along a thermally conductive medium called the parting sheet, and heat from the bleed layers is transmitted through the parting sheets to the ram air flow.

The ram and bleed layers are similar and each includes an array of cooling fins and frames or closure bars which are positioned on the parting sheets to define each layer. Frames or closure bars are placed along the edges of the layers to support the ends of the parting sheets. In addition to supporting the ends of the parting sheets, theses bars close off each layer, except where there is an air inlet or an air outlet. At the air inlets and outlets the fins provide support for the parting sheets.

To fabricate the heat exchanger, the ram and bleed layers are stacked alternately one on top of another and then placed in a vacuum furnace for brazing. During the brazing process the stack is squeezed so as to force the layers together. The brazing is complete when the fins are brazed to the parting sheets and the edges of the sheets are uniformly brazed along the closure bars. The bleed and ram air flows are supplied from corresponding manifolds that are subsequently welded to the closure bars.

Due to their size, such heat exchangers may be subjected to significant thermal stresses when they warm up and cool down. These stresses may occur when the bleed air flow is started and stopped. During these heating and cooling cycles of the exchanger, the core expands and contracts. Over time, the high thermal stresses may degrade the fins thereby causing fractures that may lead to the deterioration of sections of the core. This may compromise the structural integrity of the heat exchanger and its ability to provide the required cooling performance.

JP H07159074 discloses a heat exchanger according to the preamble of claim 1 in which a first portion of fins has a greater thickness than a second portion of fins.

EP 1528350 discloses a dual core heat according to the preamble of claims 1 and 4.

### BRIEF SUMMARY

Viewed from one aspect the present invention provides a plate fin heat exchanger according to claim 1.

Viewed from another aspect the present invention provides a dual core heat exchanger according to claim 4.

From a still further aspect the present invention provides a method of fabricating a heat exchanger according to claim 10.

In one aspect, a plate fin heat exchanger is provided. The heat exchanger includes a plurality of finned cold layers configured to conduct a first fluid and a plurality of finned warm layers configured to conduct a second fluid. The finned warm layers include an inlet side, an outlet side, a first portion of fins at the inlet side, and a second portion of fins at the outlet side. The fins of the first portion of fins have a thickness greater than a thickness of the fins of the second portion of fins.

In another aspect, a dual core heat exchanger according to claim 4 is provided. The heat exchanger includes a first core and a second core. The first core includes a first plurality of finned cold layers configured to conduct a first fluid, a first plurality of finned warm layers configured to conduct a second fluid, the first plurality of finned warm layers having an inlet side and an outlet side, and a guard fin positioned at the inlet side of each of the finned warm layers of the first plurality of finned warm layers. The guard fin has a fin thickness greater than a thickness of the fins of the first finned warm layers. The second core is fluidly separate from the first core and includes a second plurality of finned cold layers configured to conduct the first fluid and a second plurality of finned warm layers configured to conduct a third fluid. The second plurality of finned warm layers includes an inlet side and an outlet side.

In yet another aspect, a method of fabricating a heat exchanger according to claim 10 is provided. The method includes providing a plurality of finned cold layers, providing a plurality of finned warm layers having an inlet side and an outlet side, and providing a plurality of guard fins having a fin thickness greater than a fin thickness of the fins of the finned warm layers. The method further includes orienting guard fins of the plurality of guard fins at the inlet side of the finned warm layers of the plurality of finned warm layers and coupling the plurality of finned cold layers, the plurality of finned warm layers, and the plurality of guard fins.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a perspective view of an exemplary heat exchanger;
FIG. 2 is a perspective view of the heat exchanger shown in FIG. 1 with exemplary headers;
FIG. 3 is a cross-sectional view of the heat exchanger shown in FIG. 1 taken along line 3-3; and
FIG. 4 is a cross-sectional view of an exemplary bleed guard fin of the heat exchanger shown in FIG. 3 and taken along line 4-4.

The detailed description explains embodiments of the invention, together with advantages and features, by way of example with reference to the drawings.

### DETAILED DESCRIPTION

Described herein are systems and methods for improved performance and structural integrity for heat exchangers. The systems include a heat exchanger with a thicker guard fin positioned at the hot circuit inlet face to improve thermal fatigue life. The guard fin includes a slot formed therein to facilitate expansion and contraction of the guard fin.

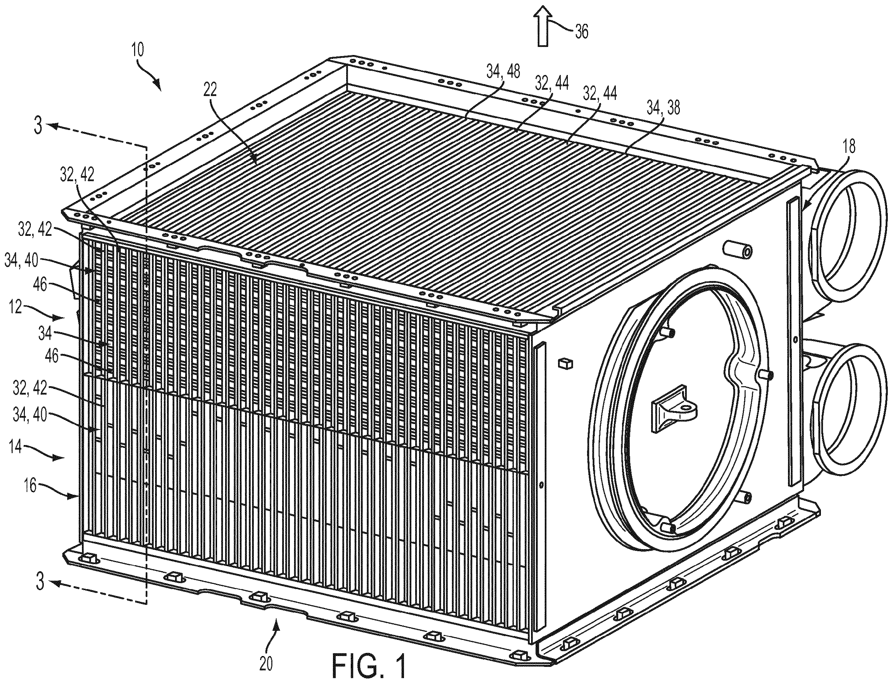

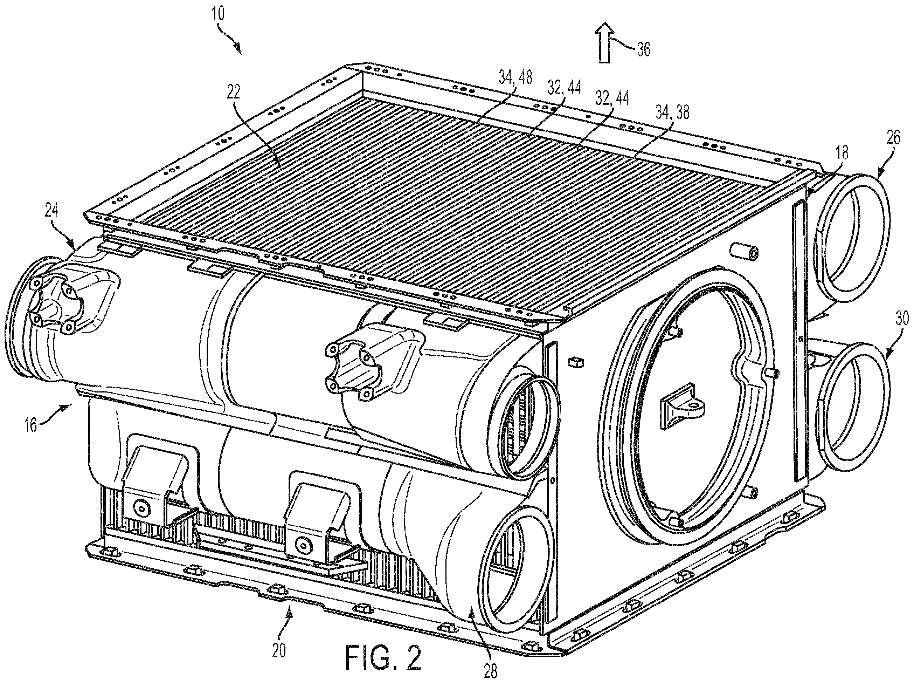

FIGS. 1 and 2 illustrate an exemplary air-to-air heat exchanger 10. In the exemplary embodiment, heat exchanger 10 is a high temperature aluminum dual heat exchanger for an air generation unit of an aircraft. However, the features described herein may be used with any suitable heat exchanger structure.

Heat exchanger 10 generally includes a primary core 12 and a secondary core 14. Each core 12, 14 includes a bleed air inlet side 16, a bleed air outlet side 18, a ram air inlet side 20, and a ram air outlet side 22. With reference to FIG. 2, hot bleed air from an engine (not shown) enters core 12 from a primary inlet header 24 and exits through a primary outlet header 26. Similarly, hot air from a compressor outlet enters secondary core 14 from a secondary inlet header 28 and exits through a secondary outlet header 30. Ram air passes from inlet 20 to outlet 22 through both primary core 12 and secondary core 14 to cool both the hot bleed air and the hot air from the compressor. The ram air may be supplied to inlet side 20 by a manifold or flow guidance device (not shown) and removed from outlet side 22 by a manifold or flow guidance device (not shown).

Heat exchanger 10 includes a plurality of layers defined by parting sheets 32 and cooling fins 34 that are located between parting sheets 32. Cold or ram air is forced through inlet 20 in the direction of arrow 36 and flows through a plurality of ram air layers 38. The ram air layers 38 are located between hot air or bleed layers 40, which receive hot air through headers 24, 28. The hot air flows through the inlets defined between bleed closure bars 42, which seal off bleed layer 40 with respect to the ram flow direction 36. Similarly, ram closure bars 44 seal off ram air layers with respect to the bleed flow.

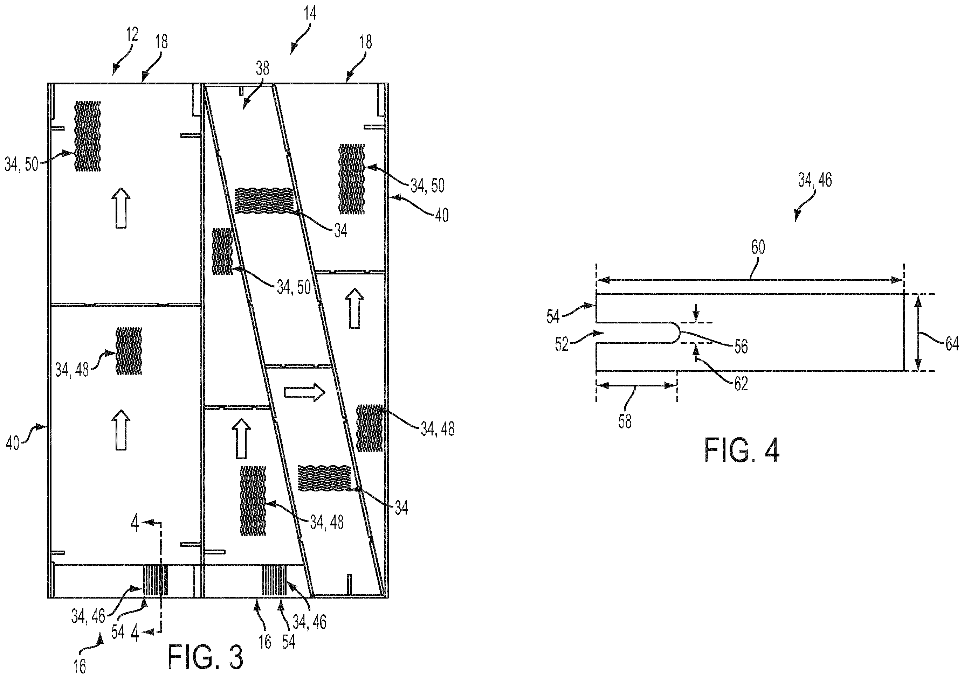

With reference to FIG. 3, cooling fins 34 have a varied thickness throughout the layers 38 and/or 40. For example, cooling fins 34 may include bleed guard fins 46, upstream fins 48, and downstream fins 50. In the exemplary embodiment, a thickness of guard fins 46 is greater than a thickness of upstream fins 48, which is greater than a thickness of downstream fins 50. Guard fins 46 are fabricated with a thickness greater than those of fins 48, 50 due in part to the bleed air being at its hottest temperature at bleed air inlet 16. Because of the increased thickness, guard fins 46 are better able to withstand the high thermal stresses such as expansion and contraction of adjacent closure bars 42, as well as expansion and contraction of individual guard fins 46. Accordingly, the thermal fatigue life of guard fins 46 is greatly increased.

Similarly, in the exemplary embodiment, upstream fins 48 are fabricated with a thickness greater than downstream fins 50 due in part because the bleed air is reduced in temperature as it travels from inlet 16 to outlet 18. Thus, the thermal stress on fins 34 decreases as the fins extend from inlet 16 to outlet 18, so the thickness of fins 34 may be reduced further downstream. Alternatively, upstream and downstream fins 48, 50 may have the same thickness while guard fins 46 are thicker. Guard fins 46 may be used in primary core 12 and/or secondary core 14. Moreover, in the exemplary embodiment illustrated in FIG. 3, guard fins 46 are straight or planar and fins 48, 50 are wavy, serrated, or offset. Alternatively, guard fins 46 may be wavy and fins 48, 50 may be straight.

In one embodiment, guard fins 46 are between 40% and 60% thicker than upstream fins 48 and between two and four times thicker than downstream fins 50. In another embodiment, guard fins 46 are between approximately 40% and approximately 60% thicker than upstream fins and between approximately two and approximately four times thicker than downstream fins 50. In one embodiment, guard fins 46 are 55% thicker than upstream fins 48 and three times thicker than downstream fins 50. In another embodiment, guard fins 46 are approximately 55% thicker than upstream fins 48 and approximately three times thicker than downstream fins 50.

In one embodiment, the thickness of guard fins 46 is between 0.008 inches and 0.01 inches. In another embodiment, the thickness of guard fins 46 is between approximately 0.008 inches (0.203 mm) and approximately 0.01 inches (0.254 mm). In yet another embodiment, the thickness of guard fins 46 is 0.009 inches (0.229 mm) or approximately 0.009 inches (0.229 mm). In one embodiment, the thickness of upstream fins 48 is between 0.004 inches (0.1020 mm) and 0.006 inches (0.152 mm). In another embodiment, the thickness of upstream fins 48 is between approximately 0.004 inches (0.102 mm) and approximately 0.006 inches (0.152 mm). In yet another embodiment, the thickness of upstream fins 48 is 0.005 inches (0.127 mm) or approximately 0.005 inches (0.127 mm). In one embodiment, the thickness of downstream fins 50 is between 0.002 inches (0.051 mm) and 0.004 inches (0.102 mm). In another embodiment, the thickness of downstream fins 50 is between approximately 0.002 inches (0.051 mm) and approximately 0.004 inches (0.102 mm). In yet another embodiment, the thickness of downstream fins 50 is 0.003 inches (0.076 mm) or approximately 0.003 inches (0.076 mm). However, guard fins 46, upstream fins 48, and downstream fins 50 may have any thickness that enables the fins to function as described herein.

As illustrated in FIG. 4, guard fins 46 includes a slot 52 formed in a leading edge 54 to facilitate compliance with the thermal growth of adjacent structure (e.g., closure bars 42). Slot 52 allows guard fin leading edge 54 to expands and contract during the rapid thermal changes on primary heat exchanger inlet 16 of primary core 12 and/or secondary core 14. In the exemplary embodiment, slot 52 includes a rounded end 56. However, slot end 56 may have any shape that enables guard fin 46 to function as described herein. In the exemplary embodiment, slot 52 is formed in leading edge 54 by electrical discharge machining. However, slot 52 may be formed using any suitable process.

In one embodiment, a slot depth 58 is between 20% and 40% of a fin length 60. In another embodiment, slot depth 58 is between approximately 20% and approximately 40% of fin length 60. In yet another embodiment, slot depth 58 is 30% or approximately 30% of fin length 60. In one embodiment, slot depth 58 is between 0.15 inches (3.81 mm) and 0.35 inches (8.89 mm). In another embodiment, slot depth 58 is between approximately 0.15 inches (3.81 mm) and approximately 0.35 inches (8.89 mm). In yet another embodiment, slot depth 58 is 0.25 inches (6.35 mm) or approximately 0.25 inches (6.35 mm). In one embodiment, fin length 60 is between 0.8 inches (20.32 mm) and 1.0 inch (25.4 mm). In another embodiment, fin length 60 is between approximately 0.8 inches (20.32 mm) and approximately 1.0 inch (25.4 mm). In yet another embodiment, fin length 60 is 0.9 inches (22.9 mm) or approximately 0.9 inches (22.9 mm).

In one embodiment, a slot width 62 is between 20% and 40% of a fin width 64. In another embodiment, slot width 62 is between approximately 20% and approximately 40% of fin width 64. In yet another embodiment, slot width is 30% or approximately 30% of fin width 64. In one embodiment, slot width 62 is between 0.05 inches (1.27 mm) and 0.07 inches (1.78 mm). In another embodiment, slot width 62 is between approximately 0.05 (1.27 mm) inches and approximately 0.07 inches (1.78 mm). In yet another embodiment, slot width 62 is 0.06 (1.52 mm) inches or approximately 0.06 inches (1.52 mm). In one embodiment, fin width 64 is between 0.15 inches (3.81 mm) and 0.35 inches (8.89 mm). In another embodiment, fin width 64 is between approximately 0.15 inches (3.81 mm) and approximately 0.35 inches (8.89 mm). In yet another embodiment, fin width 64 is 0.25 inches (6.35 mm) or approximately 0.25 inches (6.35 mm).

Heat exchanger 10 may be fabricated by stacking parting sheets 32 with closure bars 42, 44 and cooling fins 34 (including guard fins 46) in place. Weight is then applied to the layers so as to squeeze them together, and the assembly is then placed in a vacuum furnace where it is heated to a temperature at which parting sheets 32 become brazed to closure bars 42, 44 and fins 34. Slots 52 may then be formed in guard fin leading edges 54, for example by electric discharge machining. Headers 24, 26, 28, 30 are then attached to heat exchanger 10.

## Claims

1. A plate fin heat exchanger (10) comprising:
a plurality of finned cold layers (38) configured to conduct a first fluid; and
a plurality of finned warm layers (40) configured to conduct a second fluid, the finned warm layers (40) having an inlet side (16), an outlet side (18), a first portion of fins (46) at the inlet side (16), and a second portion of fins (50) at the outlet side (18), wherein the fins (34) of the first portion of fins (46) have a thickness greater than a thickness of the fins (34) of the second portion of fins (50);
**characterised by** a slot (52) formed in a leading edge (54) of at least one fin (34) of the first portion of fins (46).

2. The plate fin heat exchanger (10) of claim 1, further comprising a third portion of fins (48) disposed between the first portion of fins (46) and the second portion of fins (50), wherein a thickness of the fins (34) of the third portion of fins (48) is less than the thickness of the fins (34) of the first portion of fins (46) and greater than the thickness of the fins (34) of the second portion of fins (50).

3. The plate fin heat exchanger (10) of any preceding claim, wherein the fins (34) of the first portion of fins (46) are between two and four times thicker than the fins (34) of the second portion of fins (50).

4. A dual core heat exchanger (10) comprising:
a first core (12) comprising:
a first plurality of finned cold layers (38) configured to conduct a first fluid; and
a first plurality of finned warm layers (40) configured to conduct a second fluid, the first plurality of finned warm layers (40) having an inlet side (16) and an outlet side (18); and
a second core (14) fluidly separate from the first core (12), the second core (14) comprising:
a second plurality of finned cold layers (38) configured to conduct the first fluid; and
a second plurality of finned warm layers (40) configured to conduct a third fluid, the second plurality of finned warm layers (40) having an inlet side (16) and an outlet side (18); a guard fin (46) positioned at the inlet side (16) of each of the finned warm layers (40) of the first plurality of finned warm layers, wherein the guard fin (46) has a fin thickness greater than a thickness of the fins (34) of the first finned warm layers (40); and **characterised by**:
a slot (52) formed in a leading edge (54) of at least one first finned warm layer (40).

5. The dual core heat exchanger (10) of claim 4, further comprising a second guard fin (46) positioned at the inlet side (16) of each of the finned warm layers (40) of the second plurality of finned warm layers, wherein the second guard fin (46) has a fin thickness greater than a thickness of the fins (34) of the second finned warm layers (40).

6. The dual core heat exchanger (10) of claim 4 or 5, further comprising a second slot (52) formed in a leading edge (54) of at least one second finned warm layer (40).

7. The dual core heat exchanger (10) of any of claims 4 to 6, wherein each finned layer (40) of the first plurality of finned warm layers includes a first portion of fins (50) located at the outlet side (18) of the first finned warm layers , and a second portion of fins (48) located between the guard fin (46) and the first portion of fins (50), wherein the second portion of fins (48) has a fin thickness less than the thickness of the guard fin (46) and greater than a fin thickness of the first portion of fins (50).

8. The dual core heat exchanger (10) of any of claims 4 to 7, wherein the guard fin (46) is between two and four times thicker than the fins (34) of the first plurality of finned warm layers (40).

9. The dual core heat exchanger (10) of any of claims 4 to 8, further comprising:
a first inlet header (24) fluidly coupled to the inlet side (16) of the first plurality of finned warm layers (40), the first inlet header (24) configured to supply bleed air from an engine to the first plurality of finned warm layers (40);
a ram air manifold coupled to an inlet of the first plurality of finned cold layers (38), the ram air manifold configured to supply ram air to the first plurality of finned cold layers (38); and
a second inlet header (28) fluidly coupled to the inlet side (16) of the second plurality of finned warm layers (40), the second inlet header (28) configured to supply compressed air from a compressor to the second plurality of finned warm layers (40).

10. A method of fabricating a heat exchanger (10), the method comprising:
providing a plurality of finned cold layers (38);
providing a plurality of finned warm layers (40) having an inlet side (16) and an outlet side (18);
providing a plurality of guard fins (46) having a fin thickness greater than a fin thickness of the fins (34) of the finned warm layers (40);
forming a slot (52) in a leading edge (54) of at least one guard fin (46) of the plurality of guard fins;
orienting guard fins (46) of the plurality of guard fins at the inlet side (16) of the finned warm layers (40) of the plurality of finned warm layers; and
coupling the plurality of finned cold layers (38), the plurality of finned warm layers (40), and the plurality of guard fins (46).

11. The method of claim 10, wherein the step of coupling comprises brazing together the plurality of finned cold layers (38), the plurality of finned warm layers (40), and the plurality of guard fins (46).

12. The method of claim 10 or 11, wherein the slot (52) is formed using an electrical discharge machining process.

## Patentansprüche

1. Rippenplatten-Wärmetauscher (10), umfassend:
eine Vielzahl von gerippten kalten Schichten (38), die dazu ausgelegt sind, eine erste Flüssigkeit zu leiten; und
eine Vielzahl von gerippten warmen Schichten (40), die dazu ausgelegt sind, eine zweite Flüssigkeit zu leiten, wobei die gerippten warmen Schichten (40) eine Einlassseite (16), eine Auslassseite (18), einen ersten Abschnitt von Rippen (46) an der Einlassseite (16) und einen zweiten Abschnitt von Rippen (50) an der Auslassseite (18) aufweisen, wobei die Rippen (34) des ersten Abschnitts von Rippen (46) eine Dicke aufweisen, die größer ist als eine Dicke der Rippen (34) des zweiten Abschnitts von Rippen (50) ;
**gekennzeichnet durch** einen Schlitz (52), der in einer Vorderkante (54) von mindestens einer Rippe (34) des ersten Abschnitts von Rippen (46) gebildet wird.

2. Rippenplatten-Wärmetauscher (10) nach Anspruch 1, ferner umfassend einen dritten Abschnitt von Rippen (48), der zwischen dem ersten Abschnitt von Rippen (46) und dem zweiten Abschnitt von Rippen (50) angeordnet ist, wobei eine Dicke der Rippen (34) des dritten Abschnitts von Rippen (48) kleiner ist als die Dicke der Rippen (34) des ersten Abschnitts von Rippen (46) und größer als die Dicke der Rippen (34) des zweiten Abschnitts von Rippen (50).

3. Rippenplatten-Wärmetauscher (10) nach einem der vorstehenden Ansprüche, wobei die Rippen (34) des ersten Abschnitts von Rippen (46) zwischen zwei- und viermal dicker sind als die Rippen (34) des zweiten Abschnitts von Rippen (50).

4. Zweikern-Wärmetauscher (10), umfassend:
einen ersten Kern (12), umfassend:
eine erste Vielzahl von gerippten kalten Schichten (38), die dazu ausgelegt sind, eine erste Flüssigkeit zu leiten; und
eine erste Vielzahl von gerippten warmen Schichten (40), die dazu ausgelegt sind, eine zweite Flüssigkeit zu leiten, wobei die erste Vielzahl von gerippten warmen Schichten (40) eine Einlassseite (16) und eine Auslassseite (18) aufweist; und
einen zweiten Kern (14), der von dem ersten Kern (12) fluidgetrennt ist, der zweite Kern (14) umfassend:
eine zweite Vielzahl von gerippten kalten Schichten (38), die dazu ausgelegt sind, die erste Flüssigkeit zu leiten; und
eine zweite Vielzahl von gerippten warmen Schichten (40), die dazu ausgelegt sind, eine dritte Flüssigkeit zu leiten, wobei die zweite Vielzahl von gerippten warmen Schichten (40) eine Einlassseite (16) und eine Auslassseite (18) aufweist;
eine Schutzrippe (46), angeordnet an der Einlassseite (16) einer jeden der gerippten warmen Schichten (40) der ersten Vielzahl von gerippten warmen Schichten, wobei die Schutzrippe (46) eine größere Rippendicke aufweist als eine Dicke der Rippen (34) der ersten gerippten warmen Schichten (40); und
**gekennzeichnet durch**:
einen Schlitz (52), der in einer Vorderkante (54) von mindestens einer ersten gerippten warmen Schicht (40) gebildet wird.

5. Zweikern-Wärmetauscher (10) nach Anspruch 4, ferner umfassend eine zweite Schutzrippe (46), angeordnet an der Einlassseite (16) einer jeden der gerippten warmen Schichten (40) der zweiten Vielzahl von gerippten warmen Schichten, wobei die zweite Schutzrippe (46) eine größere Rippendicke aufweist als eine Dicke der Rippen (34) der zweiten gerippten warmen Schichten (40).

6. Zweikern-Wärmetauscher (10) nach Anspruch 4 oder 5, ferner umfassend einen zweiten Schlitz (52), der in einer Vorderkante (54) von mindestens einer zweiten gerippten warmen Schicht (40) gebildet wird.

7. Zweikern-Wärmetauscher (10) nach einem der Ansprüche 4 bis 6, wobei jede gerippte Schicht (40) der ersten Vielzahl von gerippten warmen Schichten einen ersten Abschnitt von Rippen (50) aufweist, der an der Auslassseite (18) der ersten gerippten warmen Schichten angeordnet ist, und einen zweiten Abschnitt von Rippen (48), der zwischen der Schutzrippe (46) und dem ersten Abschnitt von Rippen (50) angeordnet ist, wobei der zweite Abschnitt von Rippen (48) eine Rippendicke aufweist, die kleiner ist als die Dicke der Schutzrippe (46) und größer als eine Rippendicke des ersten Abschnitts von Rippen (50).

8. Zweikern-Wärmetauscher (10) nach einem der Ansprüche 4 bis 7, wobei die Schutzrippe (46) zwischen zwei- und viermal dicker ist als die Rippen (34) der ersten Vielzahl von gerippten warmen Schichten (40).

9. Zweikern-Wärmetauscher (10) nach einem der Ansprüche 4 bis 8, ferner umfassend:
einen ersten Einlasskopf (24), der mit der Einlassseite (16) der ersten Vielzahl von gerippten warmen Schichten (40) fluidgekoppelt ist, wobei der erste Einlasskopf (24) dazu ausgelegt ist, der ersten Vielzahl von gerippten warmen Schichten (40) Zapfluft von einem Motor zuzuführen;
einen Luftstaudruckverteiler, der mit einem Einlass der ersten Vielzahl von gerippten kalten Schichten (38) gekoppelt ist, wobei der Luftstaudruckverteiler dazu ausgelegt ist, der ersten Vielzahl von gerippten kalten Schichten (38) Stauluft zuzuführen; und
einen zweiten Einlasskopf (28), der mit der Einlassseite (16) der zweiten Vielzahl von gerippten warmen Schichten (40) fluidgekoppelt ist, wobei der zweite Einlasskopf (28) dazu ausgelegt ist, der zweiten Vielzahl von gerippten warmen Schichten (40) Druckluft von einem Kompressor zuzuführen.

10. Verfahren zur Herstellung eines Wärmetauschers (10), das Verfahren umfassend:
Bereitstellen einer Vielzahl von gerippten kalten Schichten (38);
Bereitstellen einer Vielzahl von gerippten warmen Schichten (40) mit einer Einlassseite (16) und einer Auslassseite (18);
Bereitstellen einer Vielzahl von Schutzrippen (46) mit einer Rippendicke, die größer ist als eine Rippendicke der Rippen (34) der gerippten warmen Schichten (40);
Bilden eines Schlitzes (52) in einer Vorderkante (54) von mindestens einer Schutzrippe (46) der Vielzahl von Schutzrippen;
Ausrichten von Schutzrippen (46) der Vielzahl von Schutzrippen an der Einlassseite (16) der gerippten warmen Schichten (40) der Vielzahl von gerippten warmen Schichten; und
Koppeln der Vielzahl von gerippten kalten Schichten (38), der Vielzahl von gerippten warmen Schichten (40) und der Vielzahl von Schutzrippen (46).

11. Verfahren nach Anspruch 10, wobei der Schritt des Koppelns das Hartlöten der Vielzahl von gerippten kalten Schichten (38), der Vielzahl von gerippten warmen Schichten (40) und der Vielzahl von Schutzrippen (46) umfasst.

12. Verfahren nach Anspruch 10 oder 11, wobei der Schlitz (52) unter Verwendung eines Funkenerosionsbearbeitungsprozesses gebildet wird.

## Revendications

1. Echangeur de chaleur à ailettes en plaques (10) comprenant :
une pluralité de couches froides à ailettes (38) configurées pour conduire un premier fluide ; et
une pluralité de couches chaudes à ailettes (40) configurées pour conduire un deuxième fluide, les couches chaudes à ailettes (40) ayant un côté entrée (16), un côté sortie (18), une première partie d'ailettes (46) sur le côté entrée (16), et une deuxième partie d'ailettes (50) sur le côté sortie (18), dans lequel les ailettes (34) de la première partie d'ailettes (46) ont une épaisseur supérieure à une épaisseur des ailettes (34) de la deuxième partie d'ailettes (50) ;
**caractérisé par** une fente (52) formée dans un bord d'attaque (54) d'au moins une ailette (34) de la première partie d'ailettes (46).

2. Echangeur de chaleur à ailettes en plaques (10) selon la revendication 1, comprenant en outre une troisième partie d'ailettes (48) disposée entre la première partie d'ailettes (46) et la deuxième partie d'ailettes (50), dans lequel une épaisseur des ailettes (34) de la troisième partie d'ailettes (48) est inférieure à l'épaisseur des ailettes (34) de la première partie d'ailettes (46) et supérieure à l'épaisseur des ailettes (34) de la deuxième partie d'ailettes (50).

3. Echangeur de chaleur à ailettes en plaques (10) selon une quelconque revendication précédente, dans lequel les ailettes (34) de la première partie d'ailettes (46) sont entre deux et quatre fois plus épaisses que les ailettes (34) de la deuxième partie d'ailettes (50).

4. Echangeur de chaleur à double noyau (10) comprenant :
un premier noyau (12) comprenant :
une première pluralité de couches froides à ailettes (38) configurées pour conduire un premier fluide ; et
une première pluralité de couches chaudes à ailettes (40) configurées pour conduire un deuxième fluide, la première pluralité de couches chaudes à ailettes (40) ayant un côté entrée (16) et un côté sortie (18) ; et
un deuxième noyau (14) séparé fluidiquement du premier noyau (12), le deuxième noyau (14) comprenant :
une deuxième pluralité de couches froides à ailettes (38) configurées pour conduire le premier fluide ; et
une deuxième pluralité de couches chaudes à ailettes (40) configurées pour conduire un troisième fluide, la deuxième pluralité de couches chaudes à ailettes (40) ayant un côté entrée (16) et un côté sortie (18) ;
une ailette de garde (46) positionnée sur le côté entrée (16) de chacune des couches chaudes à ailettes (40) de la première pluralité de couches chaudes à ailettes, dans lequel l'ailette de garde (46) a une épaisseur d'ailette supérieure à une épaisseur des ailettes (34) des premières couches chaudes à ailettes (40) ; et
**caractérisé par** :
une fente (52) formée dans un bord d'attaque (54) d'au moins une première couche chaude à ailettes (40).

5. Echangeur de chaleur à double noyau (10) selon la revendication 4, comprenant en outre une deuxième ailette de garde (46) positionnée sur le côté entrée (16) de chacune des couches chaudes à ailettes (40) de la deuxième pluralité de couches chaudes à ailettes, dans lequel la deuxième ailette de garde (46) a une épaisseur d'ailette supérieure à une épaisseur des ailettes (34) des deuxièmes couches chaudes à ailettes (40).

6. Echangeur de chaleur à double noyau (10) selon la revendication 4 ou 5, comprenant en outre une deuxième fente (52) formée dans un bord d'attaque (54) d'au moins une deuxième couche chaude à ailettes (40).

7. Echangeur de chaleur à double noyau (10) selon l'une quelconque des revendications 4 à 6, dans lequel chaque couche à ailettes (40) de la première pluralité de couches chaudes à ailettes inclut une première partie d'ailettes (50) située sur le côté sortie (18) des premières couches chaudes à ailettes, et une deuxième partie d'ailettes (48) située entre l'ailette de garde (46) et la première partie d'ailettes (50), dans lequel la deuxième partie d'ailettes (48) a une épaisseur d'ailette inférieure à l'épaisseur de l'ailette de garde (46) et supérieure à une épaisseur d'ailette de la première partie d'ailettes (50).

8. Echangeur de chaleur à double noyau (10) selon l'une quelconque des revendications 4 à 7, dans lequel l'ailette de garde (46) est entre deux et quatre fois plus épaisse que les ailettes (34) de la première pluralité de couches chaudes à ailettes (40).

9. Echangeur de chaleur à double noyau (10) selon l'une quelconque des revendications 4 à 8, comprenant en outre :
un premier collecteur d'entrée (24) couplé fluidiquement au côté entrée (16) de la première pluralité de couches chaudes à ailettes (40), le premier collecteur d'entrée (24) étant configuré pour fournir de l'air de prélèvement provenant d'un moteur à la première pluralité de couches chaudes à ailettes (40) ;
un collecteur d'air dynamique couplé à une entrée de la première pluralité de couches froides à ailettes (38), le collecteur d'air dynamique étant configuré pour fournir de l'air dynamique à la première pluralité de couches froides à ailettes (38) ; et
un deuxième collecteur d'entrée (28) couplé fluidiquement au côté entrée (16) de la deuxième pluralité de couches chaudes à ailettes (40), le deuxième collecteur d'entrée (28) étant configuré pour fournir de l'air comprimé provenant d'un compresseur à la deuxième pluralité de couches chaudes à ailettes (40).

10. Procédé de fabrication d'un échangeur de chaleur (10), le procédé comprenant :
la fourniture d'une pluralité de couches froides à ailettes (38) ;
la fourniture d'une pluralité de couches chaudes à ailettes (40) ayant un côté entrée (16) et un côté sortie (18) ;
la fourniture d'une pluralité d'ailettes de garde (46) ayant une épaisseur d'ailette supérieure à une épaisseur d'ailette des ailettes (34) des couches chaudes à ailettes (40) ;
la formation d'une fente (52) dans un bord d'attaque (54) d'au moins une ailette de garde (46) de la pluralité d'ailettes de garde ;
l'orientation d'ailettes de garde (46) de la pluralité d'ailettes de garde sur le côté entrée (16) des couches chaudes à ailettes (40) de la pluralité de couches chaudes à ailettes ; et
le couplage de la pluralité de couches froides à ailettes (38), de la pluralité de couches chaudes à ailettes (40) et de la pluralité d'ailettes de garde (46).

11. Procédé selon la revendication 10, dans lequel l'étape de couplage comprend le brasage de la pluralité de couches froides à ailettes (38), de la pluralité de couches chaudes à ailettes (40) et de la pluralité d'ailettes de garde (46) les unes aux autres.

12. Procédé selon la revendication 10 ou 11, dans lequel on forme la fente (52) en utilisant un procédé d'électroérosion.
